# EUROPEAN PATENT SPECIFICATION

(11) **EP 1 576 618 B1**
(45) Date of publication and mention of the grant of the patent: **28.03.2007**
(21) Application number: 02796486.5
(22) Date of filing: 24.12.2002
(51) Int. Cl.: G21C 17/06

(54) **METHOD AND APPARATUS FOR CARRYING OUT A MOX FUEL ROD QUALITY CONTROL**
VERFAHREN UND VORRICHTUNG ZUM DURCHFÜHREN EINER QUALITÄTSKONTROLLE AN EINEM MOX-BRENNSTAB
PROCEDE ET APPAREIL POUR EFFECTUER UN CONTROLE QUALITE DE BARRES DE COMBUSTIBLE MOX

(43) Date of publication of application: 21.09.2005
(73) Proprietor: Belgonucleaire SA, 1200 Bruxelles (BE)
(72) Inventor: VANDERGHEYNST, Alain, B-7370 Dour (BE); EECKHOUT, François, B-2400 Mol (BE); MOSTIN, Nicole, B-2440 Geel (BE)
(74) Representative: Gevers, François
(86) International application number: PCT/BE2002/000201
(87) International publication number: WO 2004/059656

(56) References cited:
- EP-A- 0 280 925
- EP-A- 0 356 701
- GB-A- 1 279 019
- GB-A- 2 067 950
- GB-A- 2 170 003
- PATENT ABSTRACTS OF JAPAN vol. 018, no. 007 (P-1670), 7 January 1994 (1994-01-07) & JP 05 249281 A (TOSHIBA CORP), 28 September 1993 (1993-09-28)
- DATABASE WPI Section Ch, Week 197846 Derwent Publications Ltd., London, GB; Class K05, AN 1978-82727A XP002266294 & JP 53 115494 A (GENSI NENRYO KOGYO), 7 October 1978 (1978-10-07)

## Description

This invention relates to a method for a comprehensive quality control of MOX (mixed oxide) fuel rods, and to an apparatus designed for carrying out said method.

### Background of the Invention

Nuclear fuel rods are utilized in most power reactors (light water reactors, heavy water reactors, breeder reactors, ...) as the elementary unit isolating the nuclear fuel from the environment. As such, they must meet high quality standards and are controlled accordingly, before being released for mounting into a fuel assembly (sometimes called fuel element or fuel bundle), which is the final product, used to transport the fuel, to load it into the reactor, to maintain it in the reactor core, to unload it from the reactor and eventually to dispose of it by interim storage for later reprocessing or final disposal.

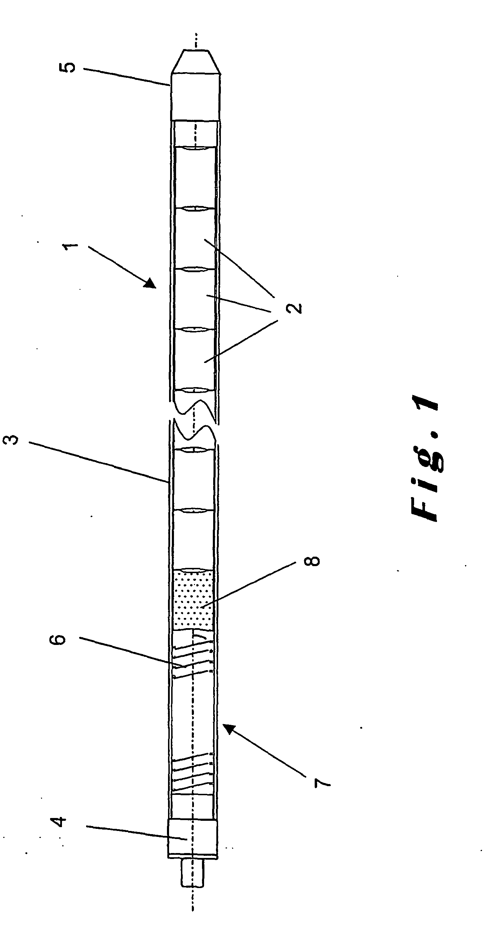

A fuel rod 1 (Figure 1) consists typically of a stack of pellets 2 made from fissionable material, enclosed in a tube or cladding 3, sealed at both open ends by an end plug, an upper end plug 4 and a lower end plug 5. The pellet stack is usually maintained in place by a spring 6, located in a plenum 7, designed to accommodate the fuel rod internal pressure. This internal pressure results from the initial gaseous filling of fuel rods, from the helium mainly produced by alpha decay of the plutonium and of the curium formed during irradiation and from the gaseous fission products. In some fuel rod designs, a plenum is provided at the bottom end as well as at the top end of the fuel rod. An isolating pellet 8 is sometimes provided between the plenum spring 6 and the adjacent fuel pellet 2.

Besides leak tightness of the fuel rod, related to welding the end plugs, the most prominent quality attributes of any fuel rod are :
- the enrichment level of each pellet along the stack, which determines the power rating. It is most commonly verified by scanning the native or induced gamma emission or X-ray fluorescence of the fuel rod ;
- the absence of inter-pellet gaps, which cause high local power peaking and may result in failure of the cladding. It can be verified by radiographing the full length of the fuel rod ;
- the pellet stack length, plenum length and presence of the plenum spring and other structural components (getters, Al₂0₃ insulating pellets, UO₂ blanket pellets,...). It is commonly verified by radiographing the plenum regions of each rod ;
- the total length of the fuel rod, which relates to good behavior of the fuel assembly. It is commonly verified by metrology ;
- contamination of the external surface of the fuel rod by radioactive material, which affects internal radiation exposure of the personnel in the further fabrication and transportation steps, as well as the radioactivity level of the whole primary circuit of the power reactor and its purification system. It is commonly verified by measuring the alpha activity of the fuel rod or selected areas of the fuel rod. The alpha radiations have indeed a very small penetration capability and therefore correctly represent the amount of nuclear fuel present at the surface ;and
- the relationships between a fuel rod identification code, a mark and/or a number, and the specified type and characteristics of fuel. They are verified by comparing the fuel rod identification and the results of quality verifications mentioned above.

The most usual type of nuclear fuel is made from enriched uranium dioxide in which the natural content of ²³⁵U has been increased, leaving as residue depleted uranium, with a lower than original ²³⁵U content. This enrichment process is conducted on gaseous uranium fluoride, producing therefore highly homogeneous enriched uranium, as is typical for any gaseous phase process. Re-conversion of the enriched uranium hexafluoride into uranium dioxide to be manufactured into fuel rods does not alter the good enrichment homogeneity of the feed and of the resulting fuel. The verification of pellet enrichment along a fuel rod, mentioned above, therefore has the sole purpose of verifying that 'rogue' pellets (pellets not meeting specifications of the fabrication lot being manufactured) have not sneaked in.

Plutonium recuperated from reprocessing spent nuclear UO₂ fuel is a more energetic material than ²³⁵U and can therefore favorably be utilized to manufacture nuclear fuel. For this purpose, the plutonium oxide is blended with depleted (or natural) uranium dioxide to constitute a mixed oxide, commonly referred to as MOX, fuel functionally equivalent to the enriched uranium fuel that it replaces for loading into the power reactor core. The mechanical blending of powders to constitute MOX fuel does not benefit from the inherent homogeneity of enriched uranium (resulting from a gaseous processing step). The enrichment control along the fuel rod has to verify that each pellet has a plutonium content within the specified tolerance range and detect any rogue pellets in the fuel stack.

Additionally, unlike ²³⁵U, which is a single fissile isotope, plutonium feed consists mainly of five plutonium isotopes (²³⁸Pu, ²³⁹Pu, ²⁴⁰Pu, ²⁴¹Pu, ²⁴²Pu) and of americium (²⁴¹Am), which is a decay product of ²⁴¹Pu. In this plutonium feed, only two isotopes are 'fissile', ²³⁹Pu and ²⁴¹Pu, and the four others are essentially neutron absorbers. Several plutonium lots are used to fabricate a MOX fuel reload. These lots have inherently different isotopic compositions and americium contents. The resulting MOX fuel must however contain plutonium with uniform isotopic composition and americium content, within specified tolerance ranges. It is achieved by judiciously taking aliquots of different plutonium feed lots for blending with uranium oxide. As a consequence, the quality control of MOX fuel rods has to verify also that the specified uniformity of plutonium isotopic composition and americium content is actually achieved in the end product. It is an additional challenge for the quality control equipment.

MOX fuel is also considered the most efficient way to process plutonium declared in excess of military needs. Irradiation of MOX fuel from weapon-grade plutonium irreversibly degrades the isotopic composition of the plutonium to an extent that renders it inadequate for later military purposes. As compared to civil plutonium, weapon-grade plutonium is essentially composed Of ²³⁹Pu, with a small content of ²⁴⁰Pu and a minute content of ²⁴¹Pu. So variability of isotopic composition and americium content are not a problem. But the very low content of neutron absorbing plutonium isotopes results in reduced tolerance margins having to be specified for plutonium contents in each pellet. Moreover, the negligible quantity of americium, the most intense gamma emitter, renders the detection of pellet-to-pellet variations in plutonium content less sensitive. So the quality control problem is finally as acute for MOX fuel using weapon-grade plutonium as that coming from civil plutonium.

The higher neutron cross-section and the higher radiotoxicity of plutonium compared to ²³⁵U result in a lower tolerable surface contamination of MOX fuel rods than enriched uranium fuel rods. Extra attention must therefore be devoted to obtaining reliable and reproducible alpha contamination data from quality control.

The nuclear material accountancy and the safeguards surveillance are much stricter for plutonium than for enriched uranium. Hence, the quality control of the fuel rods must provide more accurate data to the nuclear material accountancy system and to the safeguards inspectors in a MOX fuel fabrication plant than in a uranium fuel fabrication plant.

A MOX fuel assembly is constituted from MOX fuel rods with three to five different Pu contents, while an equivalent enriched uranium fuel assembly contains usually a lower number of fuel rods of different uranium enrichments. Simultaneously, the power peaking resulting from an inter-pellet gap in the pellet stack, from a non-conforming pellet in a fuel rod or from a non-conforming fuel rod in a given position within a fuel assembly is much more severe in MOX fuel than in enriched uranium fuel. For MOX fuel, it is therefore more important than for uranium fuel, to assure detection of inter-pellet gaps in the pellet stack, of rogue pellets in a fuel rod or of mismatch of rod identification code with contained fuel type.

All plutonium isotopes and americium are gamma emitters, to such an extent that the gamma radiation from a MOX fuel rod is orders of magnitude higher than from an equivalent enriched uranium fuel rod. The neutron activity, resulting partially from spontaneous fissions and partially from (α, n) reactions with the oxygen of the oxide, is also many orders of magnitude higher than enriched uranium fuel rods. Hence the handling of MOX fuel rods must be reduced to a minimum and their presence outside shielded storage places must be as short as possible, to minimize radiation exposure of the personnel.

To summarize the challenge, quality control of MOX fuel rods is encompassing more attributes and needs to be more accurate than for uranium fuel rods, but the time devoted to quality control must be as short as possible, to minimize personnel exposure.

### Field of the invention

Most of the existing quality control methods developed specifically for fuel rods containing mixed oxides (herein included not only uranium-plutonium oxides, but also uranium-gadolinium oxides) place emphasis on the verification of the enrichment uniformity (or specified axial distribution) along the fuel rod. One apparatus is generally dedicated to the implementation of such quality control method.

One example is the method and apparatus for passively gamma scanning a nuclear fuel rod described in the US patent 4,822,552. The fuel rod is stepwise advanced along a linear path of travel and its natural gamma radiation emission (proportional to the enrichment) is counted by a plurality of regularly spaced apart detectors, the signals of which are summed to obtain the calculated enrichment of each length segment along the fuel rod. The stepwise progression of the fuel rod through the apparatus prevents incorporating in the same apparatus the control of other attributes, as mentioned in the challenge described in the conclusion to the above Background of the Invention.

Another example is the system described in US patent 5,108,692 for non-destructive testing of fuel rods containing uranium oxide pellets with axially variable enrichment contents and/or for fuel rods containing uranium-gadolinium oxide pellets. The fuel rod is conveyed at uniform speed through a test channel, in front of successively a magnetometer (sensitive to the gadolinium content), a background gamma rays detector, a densitometer (consisting of a gamma source and a scintillation detector) and an active scanner (consisting of a neutron source and a gamma ray detector). A computer determines, from those counts, the gadolinium content and the enrichment, by correcting the active scanner response for the background gamma rays and for the density at each location along the fuel rod. While this is an example of non-destructive testing of fuel rods for multiple attributes, it does not address the specific challenge of MOX fuel, described in the Background above.

Neutron coincidence counting is also a known method to obtain the mass of fissile material within a tested volume. Time required to achieve a good precision precludes utilizing this method to determine local variations of Pu content for fuel rod scanning purposes. The method is practically only used for global fissile material verification by safeguards inspectors.

X-ray fluorescence systems that count the X-rays emitted by Pu and U are used industrially to provide a direct measure of the enrichment of MOX pellets. An example is the system described in "Use of X-ray fluorescence for high precision measurement of uranium and plutonium in MOX", presented by C. G. Wilkins and H. Spottiswoode, in Proceedings of the ESARDA Symposium, Sevilla, 4-6 May 1999. Such a system can be used to implement a passive radiometric method in a fuel rod scanner, but the sensitivity is low if the fuel rod scanner has to operate at industrial throughputs. Moreover, X-rays have a lower penetrating power in the materials than gamma rays. So X-ray fluorescence measures essentially the periphery of the pellets and is practically insensitive to large fissile or inert inclusions or other heterogeneities at or near the center of the pellet.

All those known systems address only one or a few attributes that need to be controlled in industrially fabricated MOX fuel rods. In that respect, they do not meet the challenge described in the Background above.

In approaching the challenge, it was recognized that the solution should encompass as many as possible non-destructive verifications of quality attributes (hereafter "quality controls"). It minimizes the buffer storages to be provided between quality controls. As a result, the quality control area is reduced, which reduces the expensive capital cost of the MOX plant, and the fuel handling is reduced, which reduces the radiation exposure of the workers.

Amongst the quality controls to be performed, some were identified as impossible to match within a single comprehensive quality verification on moving fuel rods, namely:
- the helium leak test, which involves enclosing the fuel rods to be tested in a vacuum chamber;
- the X-ray quality control of the end plug welds, the low sensitivity of which requires the fuel rod to be immobilized during a long time under the X-ray source ;and
- the control of geometrical features such as fuel rod bow or end plug out-of-round, which require the fuel rod to be axially rolled on a flat inspection marble or in a geometry measuring bench.

The invention focuses on a comprehensive method to non-destructively control all the other quality attributes.

To be industrially applicable in modem medium and large size MOX fuel fabrication plants, the duration of an inspection should be 2 to 4 minutes per fuel rod, corresponding to an inspection rate of 2-4 cm fuel rod length per second.

### Summary of the invention

According to the invention, the quality attributes are controlled by moving the MOX fuel rod axially and performing concurrently measurements and checks using exclusively radiometry and radiography methods.

Other details and particular features of the invention will emerge from the appended claims and the description of the method and apparatus of the invention, given below by way of non-limiting examples, with reference to the appended drawings.

### Brief description of the drawings

- Figure 1: is a schematic axial cross-section of a fuel rod to be controlled with the method and/or apparatus of the invention.
- Figure 2: is a simplified schematic representation of an apparatus which can be used for carrying out the control method of the invention.
- Figure 3: is a simplified schematic representation of a *γ- radiometric* detector, which can be used in the apparatus of the invention, the fuel rod to be checked being oriented perpendicularly to the drawing.
- Figure 4: is a simplified schematic cross-section according to the direction IV-IV of Figure 3.
- Figure 5: is a simplified schematic representation of a *γ- radiographic* detector, which can be used in the apparatus of the invention, the fuel rod to be checked being oriented perpendicularly to the drawing.
- Figure 6: is a simplified schematic representation of the same *γ- radiographic* detector as of Figure 5 but the fuel rod is oriented parallel to the drawing.
- Figure 7: is a simplified schematic representation of an alpha contamination detector, which can be used in the apparatus of the invention, the fuel rod being oriented perpendicularly to the drawing.
- Figure 8: is a simplified schematic cross-section according to the direction VIII-VIII of Figure 7.
- Figure 9: is a diagrammatic representation of signal conditioning, acquisition and processing units, which can be incorporated in the apparatus of the invention.

In the various figures, the same references denote the same or similar elements.

### Detailed description of the invention

Apparatus and method will be described at the same time in order to avoid unnecessary repetitions.

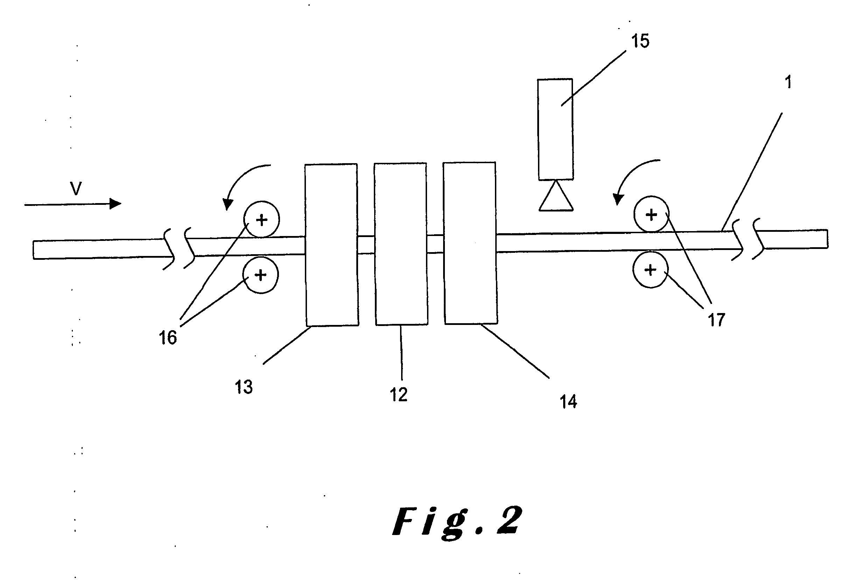

According to the invention, all or most of the quality attributes to be controlled are verified by having one single MOX fuel rod 1 (Figure 2) moved at a time, at strictly constant speed, in front of controlling devices implementing different controls, from before the fuel rod 1 passes in front of the first controlling device until it has passed the last controlling device.

The controls performed in series along the path of the moving fuel rod 1 consist of :
- *a γ - radiometry* (in a device 12) based on the scanning and the processing of the native or induced gamma radiation emitted by the fuel pellets 2 of the rod 1. It provides signals related to important quality attributes of the fuel stack : rogue pellet detection and variations along the fuel stack of Pu contents and of isotopic composition (basically ²³⁹Pu, ²⁴¹Pu, ²⁴¹Am). By integrating the measurement along the stack length, it reveals the total Pu content of the fuel rod 1. Among others, it is a confirmatory input data for nuclear material accountancy and safeguards inspection ;
- *a γ - radiography* (in a device 13) based on the quantitative detection and the processing of the gamma radiation emitted by a gamma source and traversing the fuel rod 1. It provides signals related to the structural attributes to be controlled : inter-pellet gaps, fuel stack length, presence and position of isolating pellets 8 at the end(s) of fuel pellet stack, presence of the plenum spring 7, and length of the plenum ;
- an *α - radiometry* (in a device 14) based on the counting of the alpha emission of the fuel rod surface, to measure the local Pu contamination and, by integration, the total Pu contamination ;
- an *electro-optical reading* (in a device 15) of the fuel rod identification code(s) ;and
- a conditioning and an acquisition of the signals as well as a calibration and a computation of all the signals received to locate them adequately along the fuel rod 1, a comparison of the signals with limits derived from the fuel rod specification or a translation into units used subsequently (% Pu, mm, Bq/cm², ...) and an integration of the results concerning attributes pertaining to the full fuel rod.

The successive position and the numbering of the devices 12 - 15, as given in Figure 2, are of no importance and may be modified.

A constant speed V movement of the fuel rod 1 is preferred for the embodiment of the invention. Alternatively a step-by-step progression of the fuel rod 1 in front of the controlling devices 12 - 15 could be selected. But a stepwise movement is not adapted to the detection of rogue pellets partially overlapping with the collimating windows of the controlling devices 12. Moreover to obtain the desired inspection rate, the stepwise progression of the fuel rod 1 could induce shocks, with a danger of deconsolidating the pellet stack and/or of damaging some pellets at pellet/pellet interfaces. Two pairs of rollers 16, 17 represent diagrammatically driving means for the rod motion in the apparatus.

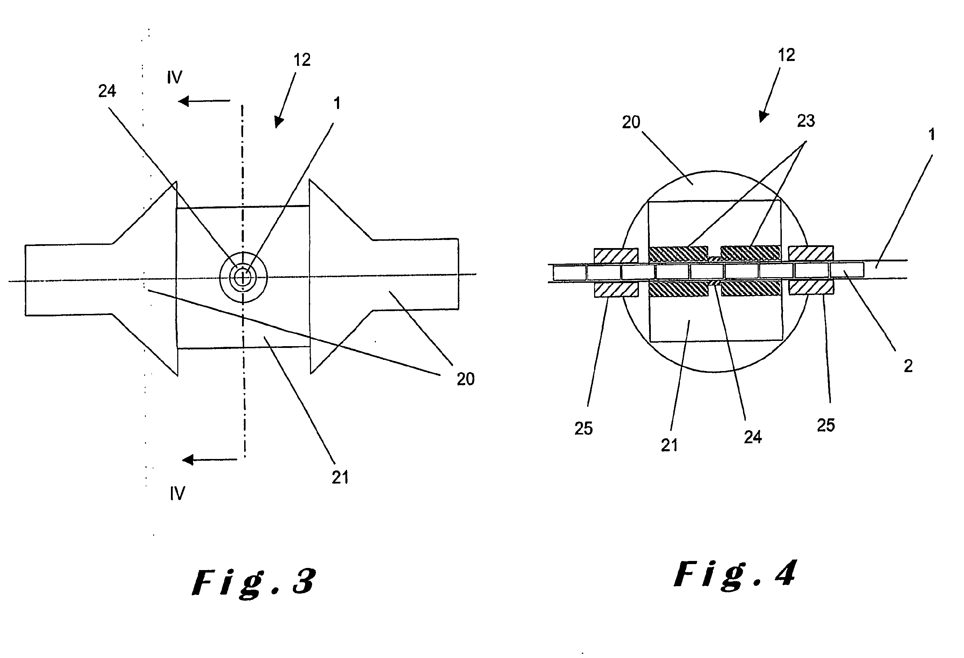

The *γ- radiometry* (as exemplified with more details in figures 3 and 4) used for the detection of rogue pellets is preferably based on measuring the gamma radiation emitted by the radioactive decay of plutonium and americium using a simplified spectrometric method with one or several gamma detector(s) 21 and different energy window discriminators. Rogue, or non-conforming, pellets are pellets that differ from specified pellets in the fuel rod 1 as regards enrichment and/or isotopic composition. The selection of gamma detectors 21 can be made between either scintillators or solid state semiconductors (e.g. NaI, Ge, CdTe,...).

A NaI (Tl) crystal 21 is preferred for the embodiment because of its high detection sensitivity and its working at room temperature and its weak sensitivity to temperature, as well as the possibility to get large monocrystals at low cost. However, its ability to distinguish between gamma rays of different energies is relatively poor, as compared to the two other types of detectors. Selecting a quite large gamma energy band specific to one Pu isotope, as outlined below, can compensate this inconvenience.

Ge detectors have by far the best energy resolution, but also have the disadvantage of having to operate at very low temperature, usually achieved by cooling with liquid nitrogen. For those reasons, their use is restricted to cases involving complex gamma ray spectra or requiring detailed information about the isotopic content of materials. In this respect, their use is practically limited to global safeguards inspections and to laboratories and research centers. GeLi can also be considered.

CdTe (and CdZnTe) detectors do not need cooling and have the highest intrinsic detection efficiency of the three types of detectors. Their superior energy resolution makes them a candidate for use instead of NaI detectors, whenever required by the characteristics of the MOX fuel to be fabricated (e.g. low ²⁴¹Am and ²⁴¹Pu contents). Known CZT detectors can also be considered.

The identification of non-conforming pellets is preferably based on the measurement of the isotopes contributing significantly to the gamma spectrum emitted naturally by the fuel (i.e. ²³⁹Pu, ²⁴¹Pu, ^{tot}Pu and ²⁴¹Am), using the following selection of energy windows :
- ²⁴¹Am strongly influences the low- and the high-energy parts of the spectra (below 100 KeV and above 500 KeV) ;
- ²⁴¹Pu (through the radioactive decay of ²³⁷U) is responsible for most of the rays between 150 KeV and 350 KeV ;
- ²³⁹Pu is responsible for most of the radiations between 350 KeV and 500 KeV ;
- ^{tot}Pu is responsible for the total gamma rays between 90 and 500 KeV.

All the isotopes present (U, Pu, Am) contribute directly and indirectly through their X and γ-emission. This emission is induced by the native radioactivity of the fuel and thus reflects the global enrichment level.

The gamma emission captured by the gamma detectors 21 is collimated with fixed collimators 23, the width of which is determined by calculation on basis of the pellet length, the plutonium content and isotopic composition, the amount and size of detectors 21 and the motion speed V of the fuel rod 1. The NaI (or CdTe) detectors 21 can also be provided with cadmium filters to reduce the low energy gamma count. A multiplicity of gamma detectors 21 can be incorporated, as required to reach the necessary quality control precision or reproducibility.

A possible embodiment of a gamma detector comprises an annular scintillator 21, a plurality of associated photomultipliers 20, an annular cadmium filter or screen 24 to dim the ²⁴¹ Am signal, collimators 23 and mechanical guides 25 for the fuel rod 1, as schematized in Figures 3 and/or 4.

Considering typical gamma spectra of different plutonium types, it appears that the statistical significance of the measurements associated with the high-energy windows is low due to the reduced counting rate. At the other end, the low energy radiations are strongly absorbed by the fuel itself and by the rod cladding 3. That means that the window between 150 KeV and 350 KeV is the most effective one and that measurements must be correlated with the ²⁴¹Pu content of the pellets.

The measurements of gamma rays emitted by the ²⁴¹ Am and Pu through a narrow detector and the detection of their low/high transition signals provide also information on the length and position of the pellet stack.

Whenever the isotopic composition of Pu processed into MOX fuel is unfavorable for the passive *γ- radiometry* described so far, an active *γ- radiometry* can be utilized, which is specifically incorporated in this description. It is, for instance, the case in fabricating MOX fuel from weapon-grade plutonium, which is essentially composed of ²³⁹Pu, with a small content of ²⁴⁰Pu, a minute content of ²⁴¹Pu and almost no ²⁴¹Am. The active *γ - radiometry* is based on activating the fuel by properly thermalized neutrons from an external neutron source (e.g. ²⁵²Cf or ²⁴¹AmLi) and measuring the gamma radiation resulting from the neutron induced fissions of predominantly ²³⁹Pu, to a small extent ²⁴¹Pu and negligibly ²³⁵U. It provides therefore a direct measurement of the fissile content. The measurement can be performed by any of the detectors already mentioned.

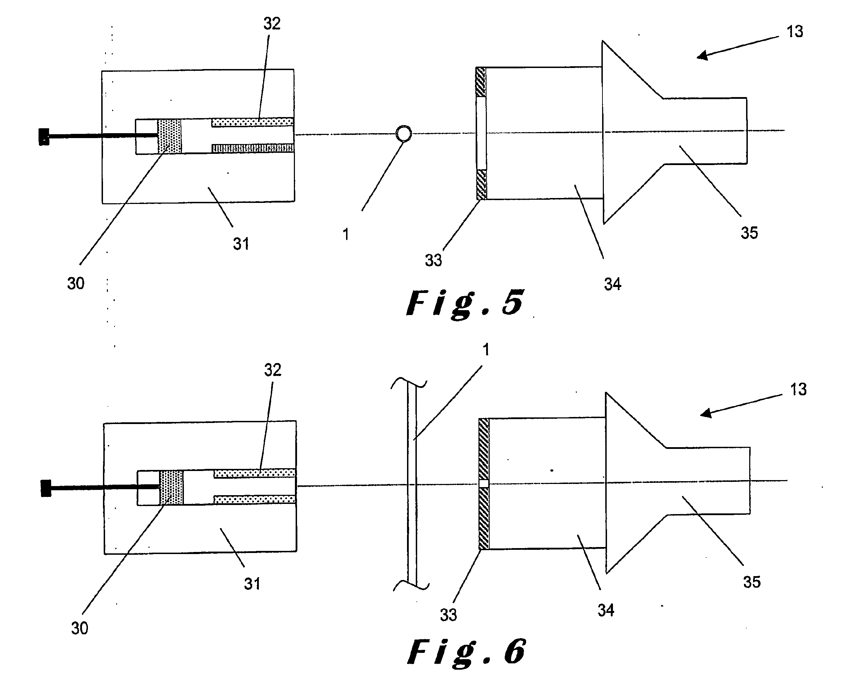

The *γ- radiography* (exemplified with more details in Figures 5 and 6) is based in a possible embodiment on the measurement, with at least one gamma detector 34 and at least one photomultiplier 35, of the traversing radiation emitted by a gamma source 30 of ²⁴¹Am or ¹³⁷Cs placed along the fuel rod 1 and narrowly collimated by a first collimator 32 near the source 30 and a second collimator 33 in front of the scintillator 34.

The selection of NaI (T1) crystal gamma-detectors 34 is preferred for the embodiment because of its counting efficiency and its working at room temperature and its weak sensitivity to temperature. The ²⁴¹Am or ¹³⁷Cs isotopes are preferred as a gamma source 30 because of their long half-life and their availability.

The necessary associated photomultiplier 35 and a source shielding. 31 are represented in Figures 5 and 6.

The control of some attributes is based on the detection of low/high transitions of the counting after due processing while other controls are based on the level of counting. The position of the upper and lower ends of the fuel rod is measured by a low/high transition in one or several photocells. The low/high transitions of the signals are converted into lengths by exploiting the constant speed of the moving rod.

It provides the required data on length and position of all internal components of the fuel rod, such as the presence of spring and isolating pellets and the presence, position and magnitude of any gap between components and within stack. It also provides the total rod length and the plenum length. It contributes to the localization with respect to the lower end plug of the signals pertaining to the various attributes controlled with the γ-radiometric methods. When necessary, the data on rod length, position of components or localization of gaps can be corrected taking into account the temperature of the rod cladding.

Some attributes are controlled using both the γ - radiometry and radiography in combination. For instance, the presence of blanket pellets at the edge of the MOX fuel stack can be deduced from the measurement of the total pellet stack length using the radiography and the total MOX fuel pellet stack length using the radiometry.

The above mentioned γ-radiographic method can be used for monitoring some pellet fabrication process parameters (e.g. pellet density,...).

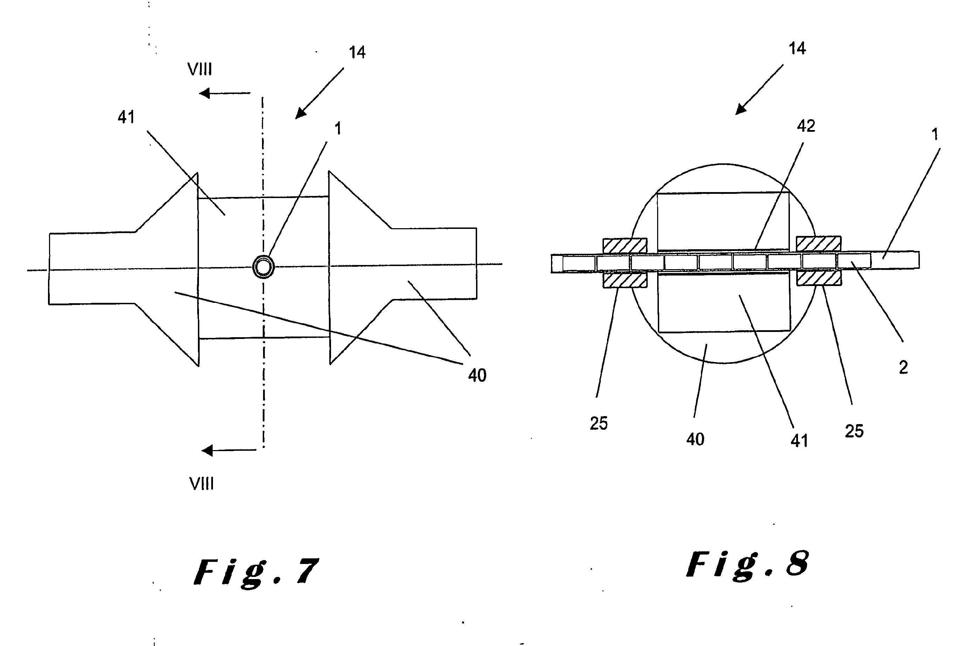

The *α - radiometry* (exemplified with more details in Figures 7 and 8) is based in a possible embodiment on the detection of alpha particles with a ZnS(Ag) scintillation detector 41 coated with thin light-opaque sheets 42 and having a plurality of photomultipliers 40. The measured contamination is the sum of the remaining fixed and transferable alpha contaminations at the surface of the fuel rod 1. Because of the short distance of propagation of α - radiation in air, the mechanical guiding 25 of the rod 1 has to be accurate. CaF₂(Eu), Gd₂O₂S, Y₂O₂S doped with Tb or Eu scintillators can also be considered.

It must be understood that the present invention is in no way limited to the embodiments described above and that many modifications may be carried out thereon without departing from the scope of the claims presented below.

The *electro-optical rod identification* (device 15 of Figure 2) consists of a computerized image processing of the markings engraved in one of the rod end plugs to indicate the enrichment and/or in a computerized image processing of a human or machine readable identification code provided at the surface of the rod and/or in a reading on a barcode identification provided at the surface of the fuel rod.

A more sophisticated image processing could even detect out of specification scratches on the surface of the moving fuel rods, by providing adequate lighting.

Another possible embodiment of the *γ- radiometric* method can also be based on a comprehensive γ-spectrometry, as well known by those skilled in the art.

It should be noted that these methods (i.e. *γ - radiometry, γ-radiography, α - radiometry, electro-optical rod identification)* can be combined with other non destructive methods for the concurrent performance of the comprehensive quality control of MOX fuel rods.

### Examples of Embodiments

Non-limiting examples of individual devices used and of an apparatus implementing the integrated quality control method are provided hereunder for illustration of the method.

The constant speed movement V of the fuel rods 1 in front of the controlling devices 12 - 15 can be obtained by a driving mechanism with the pressing rolls 16, 17 driven by two stepping motors strictly electronically synchronized, one located at the feed end of the apparatus and the other at the exit end.

The rods 1 are loaded from a load table and unloaded to an unload table, with mono-layers of rods, thereby providing self-shielding of the controlling devices.

To enhance the counting of the native γ - emission in order to have the appropriate precision, an annular geometry for the NaI (or CdTe) detector 21 is often preferred to an asymmetrical geometry for the embodiment of the invention. For the same purpose, a plurality of photomultipliers 20 fixed to the annular NaI (or CdTe) detector is also preferred, as well as a plurality of detectors 12 mounted in series. In this latter case, the distance between the successive detectors is adjusted to be a multiple of the longitudinal control channels that are the result of multiplying the sampling time by the rod motion speed and a summing of the delivered signals is performed after temporal shifting. In this latter case too, the successive detection units (composed of scintillator, collimator, photomultipliers, ...) can be dedicated for the detection of one given Pu or Am isotope in order to optimize the related performances (the latter results of the optimization of the collimation width and the thickness of the cadmium filter as a function of the gamma emission of this isotope, the response of the scintillator and the rod motion speed).

In the same way, to enhance the alpha counting in order to have the appropriate precision, an annular geometry for ZnS detector 41 is often preferred to an asymmetrical geometry for the embodiment of the invention. For the same purpose, a plurality of photomultipliers 40 fixed to the annular ZnS is also preferred.

For the *γ - radiometric and γ - radiographic* measurements, the collimators 23, 32, 33 are usually made out of tungsten or machinable tungsten alloys.

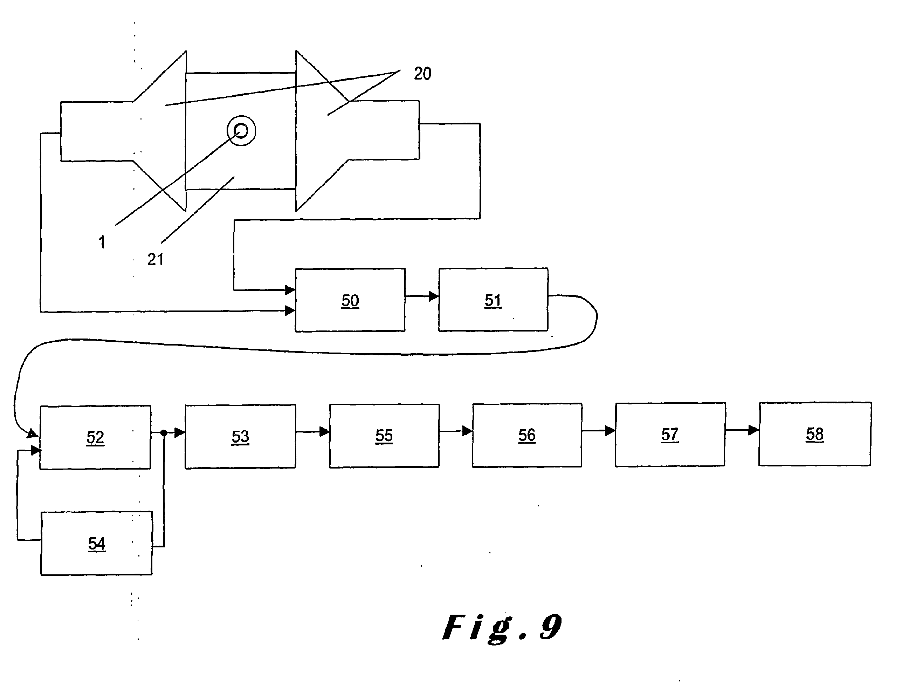

As a non-limitative example, a system to condition, acquire and process the radiation signal (Figure 9) delivered by photomultipliers 20 or 40 is composed of summing 50, preamplifying 51 and amplifying 52 units, optional pulse height analyzer 53, single channel analyzer 55, spectrum stabilizer 54, counter 56, and interface 57 to computer 58. All these devices are known by the common practice in radiometry. Figure 9 shows a possible combination of those units.

The spectrum stabilizer unit 54 is tuned on a specific energy peak of either the MOX fuel or a gamma source built in the scintillator in order to correct the different drifts in the measurement devices. Especially ¹³⁷Cs doped NaI crystals or CdZnTe crystals can also be used for that purpose.

The system can periodically be calibrated by running through the apparatus a standard and/or reference fuel rod that contains all the features and attribute limits to be detected. Alternatively, this calibration can be performed by computer modeling of the gamma emissions and of the active gamma transmissions.

The computing can be performed with any microcomputer provided with parallel and serial interfaces for signal acquisition and appropriate peripherals for reporting and archiving.

The above *γ - radiometric* and *γ - radiographic* methods can also be applied for fast breeder reactor MOX fuel rods containing UO₂ blankets, as well as for light water reactor MOX fuel rods containing different plutonium enrichments inside a same cladding.

Although the here above described invention pertains to the quality control of MOX fuel rods, it can be easily understood that this invention also applies to fuel rods made from any plutonium-bearing fuel pellets, like
- Plutonium-bearing fuel with a content of burnable or not burnable poisons (e.g. B, Gd, Er, Hf),
- mixed oxide fuel (MOX) made from thorium and plutonium,
- plutonium nitrides and carbides,
- inert matrix plutonium-bearing fuel for plutonium incineration.

The invention has been demonstrated on MOX fuel rods with the following hardware configuration:
- a combination of two stepping motor mechanisms driving the rod 1 at a speed of 3 cm/sec constant at 1/1000,
- a γ - radiometric detecting unit composed of 3 annular NaI(Tl) detectors provided each with a 15 millimeter wide collimator, a 1 mm thick cadmium filter, 2 photomultipliers and 3 energy windows,
- a γ - radiographic detecting unit composed of a 300 mCi ²⁴¹Am source and a thin asymmetrical NaI(Tl) detector provided with a 2 millimeter wide collimator and one photomultiplier,
- a α - detecting unit composed of an annular ZnS (Ag) scintillation crystal and provided with one photomultiplier,
- a signal conditioning, acquisition and preprocessing unit (optimized for 10 mm long channels), and
- a Pentium Intel microcomputer operating under Windows NT and hosting a C program,
and has lead to the detection of rogue pellets, rod structure non-conformities ( i.e. related to gaps, spring, plenum) and rod surface contamination with following performances reported for a confidence level corresponding to one standard deviation :
* reproducibility (measured using multiple runs with a caliber rod) :

| | |
|---|---|
| fuel rod length | 0.2 mm |
| pellet stack length | 0.4 mm |
| plenum length | 0.2 mm |
| gap length (gaps > 0.5 mm) | 30 % relative |
| ^{tot}Pu per channel | 0.8 % relative |
| ²³⁹Pu per channel | 0.8 % relative |
| ²⁴¹Pu per channel | 0.7 % relative |
| ²⁴¹Am per channel | 0.8 % relative |
| alpha contamination (for a total activity > 75 Bq on the whole rod) : | 20 % relative |

* detection limits :

| | |
|---|---|
| rogue pellet : | any pellet presenting a single or a multiple deviation of 7 % relative to the neighboring measurements for ²³⁹Pu, ²⁴¹Pu and/or ^{tot}Pu and 15 % for ²⁴¹Am |
| alpha contamination : | 15 Bq (over the whole rod) |
| gap : | 0.5 mm |

* throughput: one 4 m long fuel rod every 2 minutes.

## Claims

1. A method for carrying out a comprehensive quality control of a nuclear fuel rod, using radiometry, and/or radiography and/or electro optical identification for said control, said method comprising a combination of operations performed concurrently and selected from :
- measuring a plutonium content of pellets contained in said rod,
- checking for rogue pellets in said rod,
- checking internal structure and constituents in said rod,
- measuring dimensional characteristics of said rod
- measuring radioactive contamination along a surface of said rod, and
- checking conformity of a rod identity with plutonium enrichment,
and further comprising the step of moving the fuel rod axially,
**characterized in that** said nuclear fuel rod is a MOX fuel rod, said method is further **characterized by** :
- measuring the plutonium content and checking for rogue pellets through scanning of the native gamma radiation emitted by the plutonium and americium contained in the pellets with a single, or a plurality of, Nal and/or CdTe detector(s).

2. The method as claimed in claim 1, **characterized by** simultaneously measuring the plutonium content and detecting rogue pellets through scanning of the gamma radiation emitted by the plutonium contained in the pellets after activation by thermalized neutrons from a ²⁵²Cf or ²⁴¹AmLi source, the measuring being performed with a single, or a plurality of, Nal and/or CdTe detector(s).

3. The method as claimed in claim 1, **characterized by** simultaneously
- detecting said gamma radiation with the plurality of detectors, the signals of which being discriminated with several energy windows,
- temporally shifting the said delivered signals, and
- summing the shifted signals.

4. The method as claimed in claim 1, **characterized by** simultaneously measuring an external alpha contamination through a single annular detector without contacting the fuel rod.

5. The method as claimed in claim 1, **characterized by** simultaneously checking conformity of a rod identity with the plutonium content through electro optical reading or image processing of identification code(s).

6. The method as claimed in claim 1, **characterized in that** moving the fuel rod is carried out by using two independent but strictly synchronized driving mechanisms, one located at a feed end and one at an exit end of a rod scanning apparatus designed for said method, so as to insure a constant progression of the fuel rod through the apparatus from one end plug of the fuel rod to the other said two mechanisms being spaced at a distance shorter than the length of the rod.

7. An apparatus for carrying out said comprehensive MOX fuel rod quality control method according to claim 1, comprising:
- means for moving the fuel rod axially at constant speed, comprising at least two independent but strictly synchronized driving mechanisms, one located at feed end and one at an exit end of the rod control apparatus,
- a series of measuring and checking systems aligned along the path of travel of said fuel rod and operating concurrently, and
- said systems being selected from a group comprising radiometry, radiography and electro optical identification systems,
wherein the apparatus further comprises:
- a single or a plurality of Nal and/or CdTe detectors for measuring the plutonium content and detecting rogue pellets by scanning the native gamma radiation emitted by the plutonium and americium contained in the pellets.

8. The apparatus according to claim 7 **characterized in that**, for measuring the plutonium content and detecting rogue pellets, said apparatus comprises :
- a ²⁵²Cf or ²⁴¹AmLi source of thermalized neutrons for activation of the plutonium, and
- a single or a plurality of Nal and/or CdTe detectors for the scanning of the gamma radiation emitted by the activated plutonium contained in the pellets.

9. The apparatus according to claim 7 or 8, **characterized by** a single or a plurality of annular detectors for measuring the plutonium content and detecting rogue pellets.

10. The apparatus according to claim 7 or 8, **characterized by** a plurality of energy discriminators and means for summing temporally shifted γ-counts.

11. The apparatus according to claim 7 **characterized in that**, for measuring radioactive contamination of cladding along the rod, said apparatus comprises :
- a single or a plurality of annular alpha detectors for scanning of the alpha radiation emitted by an external surface of the fuel rod.

## Patentansprüche

1. Verfahren zum Ausführen einer umfassenden Qualitätskontrolle eines Kernbrennstabs, wobei für die Kontrolle Radiometrie und/oder Radiographie und/oder elektrooptische Identifizierung benutzt werden und das Verfahren eine Kombination aus Operationen umfasst, die gleichzeitig durchgeführt werden und unter folgenden Operationen ausgewählt sind:
- Messen eines Plutoniumgehalts von Pellets, die in dem Stab enthalten sind,
- Prüfen auf Ausreißerpellets in dem Stab,
- Prüfen der internen Struktur und der Bestandteile in dem Stab,
- Messen der Abmessungseigenschaften des Stabs,
- Messen der radioaktiven Kontamination an einer Oberfläche des Stabs entlang und
- Prüfen der Konformität der Identität eines Stabs mit der Plutoniumanreicherung,
und das Verfahren ferner den Schritt des axialen Bewegens des Brennstabs umfasst,
**dadurch gekennzeichnet, dass** der Kernbrennstab ein MOX-Brennstab ist, wobei das Verfahren ferner **gekennzeichnet ist durch**:
- Messen des Plutoniumgehalts und Prüfen auf Ausreißerpelltes durch Abtasten der nativen Gammastrahlung, die von dem in den Pellets enthaltenen Plutonium und Americium emittiert wird, mit einem einzigen oder mehreren Nal- und/oder CdTe-Detektor(en).

2. Verfahren nach Anspruch 1, **gekennzeichnet durch** simultanes Messen des Plutoniumgehalts und Ermitteln von Ausreißerpelltes **durch** Abtasten der Gammastrahlung, die von dem in den Pellets enthaltenen Plutonium nach der Aktivierung **durch** thermalisierte Neutronen aus einer ²⁵²Cf oder ²⁴¹AmLi-Quelle emittiert wird, wobei die Messung mit einem einzigen oder mehreren Nal- und/oder CdTe-Detektor(en) durchgeführt wird.

3. Verfahren nach Anspruch 1, **gekennzeichnet durch** simultanes
- Nachweisen der Gammastrahlung mit den mehreren Detektoren, deren Signale mit verschiedenen Energiefenstern diskriminiert werden,
- zeitliches Verschieben der gelieferten Signale und
- Summieren der verschobenen Signale.

4. Verfahren nach Anspruch 1, **gekennzeichnet durch** simultanes Messen einer äußeren Alpha-Kontamination **durch** einen einzigen ringförmigen Detektor, ohne Kontakt mit dem Brennstab aufzunehmen.

5. Verfahren nach Anspruch 1, **gekennzeichnet durch** simultanes Prüfen der Konformität der Identität eines Stabs mit der Plutoniumanreicherung durch elektrooptisches Auslesen oder Bildverarbeitung von (einem) Identifizierungscode(s).

6. Verfahren nach Anspruch 1, **dadurch gekennzeichnet, dass** das Bewegen des Brennstabs ausgeführt wird, indem zwei unabhängige, aber strikt synchronisierte Antriebsmechanismen benutzt werden, von denen einer an einer Beschickungsseite und einer an einer Austrittsseite einer für das Verfahren entworfenen Brennstababtastvorrichtung angeordnet ist, um einen konstanten Vorlauf des Brennstabs durch die Vorrichtung von einem Endverschluss des Brennstabs zu dem anderen sicherzustellen, wobei die zwei Mechanismen in einem Abstand zueinander angeordnet sind, der kürzer ist als die Länge des Stabs.

7. Vorrichtung zum Ausführen des Verfahrens zur umfassenden Qualitätskontrolle von MOX-Brennstäben nach Anspruch 1, welche Folgendes umfasst:
- Mittel zum axialen Bewegen des Brennstabs bei konstanter Geschwindigkeit, die mindestens zwei unabhängige, aber strikt synchronisierte Antriebsmechanismen umfassen, von denen einer an einer Beschickungsstelle und einer an einer Austrittsstelle der Brennstabkontrollvorrichtung angeordnet ist,
- eine Reihe von Mess- und Prüfsystemen, die an dem Weg des Brennstabs entlang ausgerichtet sind und gleichzeitig arbeiten, und
- wobei die Systeme aus einer Gruppe ausgewählt sind, die Radiometrie-, Radiographie- und elektrooptische Identifizierungssysteme umfasst,
wobei die Vorrichtung ferner Folgendes umfasst:
- einen einzigen oder mehrere Nal- und/oder CdTe-Detektoren zum Messen des Plutoniumgehalts und zum Ermitteln von Ausreißerpelltes durch Abtasten der nativen Gammastrahlung, die von dem in den Pellets enthaltenen Plutonium und Americium emittiert wird.

8. Vorrichtung nach Anspruch 7, **dadurch gekennzeichnet, dass** die Vorrichtung, zum Messen des Plutoniumgehalts und zum Ermitteln von Ausreißerpellets, Folgendes umfasst:
- eine ²⁵²Cf oder ²⁴¹AmLi-Quelle für thermalisierte Neutronen zur Aktivierung des Plutoniums und
- einen einzigen oder mehrere Nal- und/oder CdTe-Detektoren zum Abtasten der Gammastrahlung, die von dem in den Pellets enthaltenen aktivierten Plutonium emittiert wird.

9. Vorrichtung nach Anspruch 7 oder 8, **gekennzeichnet durch** einen einzelnen oder mehrere ringförmige Detektoren zum Messen des Plutoniumgehalts und zum Ermitteln von Ausreißerpellets.

10. Vorrichtung nach Anspruch 7 oder 8, **gekennzeichnet durch** mehrere Energiediskriminatoren und Mittel zum Summieren zeitlich versetzter γ-Zählimpulse.

11. Vorrichtung nach Anspruch 7, **dadurch gekennzeichnet, dass** die Vorrichtung, zum Messen der radioaktiven Kontamination der Brennstoffhülle an dem Stab entlang, Folgendes umfasst:
- einen einzigen oder mehrere ringförmige Alpha-Detektoren zum Abtasten der Alphastrahlung, die von einer Außenfläche des Brennstabs emittiert wird.

## Revendications

1. Procédé pour réaliser un contrôle de qualité étendu d'un crayon de combustible nucléaire, faisant usage de radiométrie, et/ou radiographie et/ou identification électro-optique pour ledit contrôle, ledit procédé comportant une combinaison d'opérations réalisées concurremment et choisies parmi :
• la mesure de la teneur en plutonium de pastilles contenues dans ledit crayon,
• la détection de pastilles hors normes dans ledit crayon,
• le contrôle de la structure interne et des constituants dans ledit crayon,
• la mesure des caractéristiques dimensionnelles dudit crayon,
• la mesure de la contamination radioactive le long d'une surface dudit crayon, et
• le contrôle de la conformité d'une identité de crayon avec l'enrichissement en plutonium,
et comportant par ailleurs l'étape de déplacer axialement le crayon de combustible,
**caractérisé en ce que** ledit crayon de combustible nucléaire est un crayon de combustible MOX, ledit procédé étant aussi **caractérisé par** :
• la mesure de la teneur en plutonium et la détection de pastilles hors normes par balayage du rayonnement gamma natif émis par le plutonium et l'américium contenus dans les pastilles avec un seul, ou une pluralité de, détecteur(s) Nal et/ou CdTe.

2. Le procédé tel que revendiqué dans la revendication 1,
**caractérisé par** la mesure de la teneur en plutonium et la détection de pastilles hors normes simultanées par le balayage du rayonnement gamma émis par le plutonium contenu dans les pastilles après activation par neutrons thermalisés d'une source ²⁵²Cf ou ²⁴¹AmLi, la mesure étant réalisée avec un seul, ou une pluralité de détecteur(s) Nal et/ou CdTe.

3. Le procédé tel que revendiqué dans la revendication 1,
**caractérisé en ce que**, simultanément
• ledit rayonnement gamma est détecté avec la pluralité de détecteurs, dont les signaux sont discriminés avec plusieurs fenêtres énergétiques ;
• lesdits signaux délivrés sont décalés dans le temps, et
• les signaux décalés sont additionnés.

4. Le procédé tel que revendiqué dans la revendication 1,
**caractérisé en ce que** simultanément la contamination alpha externe est mesurée à travers un seul détecteur annulaire sans contact avec le crayon de combustible.

5. Le procédé tel que revendiqué dans la revendication 1,
**caractérisé en ce que** simultanément la conformité d'une identité de crayon avec la teneur en plutonium est contrôlée par lecture électro-optique ou traitement d'image du ou des code(s) d'identification.

6. Le procédé tel que revendiqué dans la revendication 1,
**caractérisé en ce que** le déplacement du crayon de combustible est réalisé en utilisant deux mécanismes moteurs indépendants mais strictement synchronisés, un situé à l'extrémité amont et un à l'extrémité aval d'un dispositif de balayage de crayon conçu pour ledit procédé, de façon à assurer la progression constante du crayon de combustible à travers l'appareil d'un bouchon d'extrémité du crayon de combustible à l'autre, lesdits deux mécanismes étant séparés par une distance moindre que la longueur du crayon.

7. Un appareil pour réaliser ledit procédé de contrôle de qualité étendu de crayons de combustible MOX selon la revendication 1, comportant :
• des moyens pour déplacer le crayon de combustible axialement à vitesse constante, comportant au moins deux mécanismes moteurs indépendants mais strictement synchronisés, un situé à l'extrémité amont et un à l'extrémité aval du dispositifde contrôle de crayons,
• une série de systèmes de mesure et contrôle alignés le long du chemin de déplacement dudit crayon de combustible et opérant concurremment, et
• lesdits systèmes étant sélectionnés parmi un groupe comprenant des systèmes de radiométrie, radiographie et d'identification électro-optique,
où l'appareil comporte aussi :
• un seul ou une pluralité de capteurs Nal et/ou CdTe pour mesurer la teneur en plutonium et détecter des pastilles hors normes par balayage du rayonnement gamma natif émis par le plutonium et l'américium contenus dans les pastilles.

8. L'appareil selon la revendication 7 **caractérisé en ce que**, pour mesurer la teneur en plutonium et détecter les pastilles hors normes, ledit appareil comporte :
• une source ²⁵²Cf ou ²⁴¹AmLi de neutrons thermalisés pour l'activation du plutonium, et
• un seul ou une pluralité de capteurs Nal et/ou CdTe pour le balayage du rayonnement gamma émis par le plutonium activé contenu dans les pastilles.

9. L'appareil selon les revendications 7 ou 8, **caractérisé par** un seul ou une pluralité de capteurs annulaires pour mesurer la teneur en plutonium et détecter des pastilles hors normes.

10. L'appareil selon les revendications 7 ou 8, **caractérisé par** une pluralité de discriminateurs en énergie et moyens pour additionner les comptages γ décalés dans le temps.

11. L'appareil selon la revendication 7, **caractérisé en ce que**, pour mesurer la contamination radioactive de la gaine du crayon, ledit appareil comporte :
• un seul ou une pluralité de capteurs alpha annulaires pour balayer le rayonnement alpha émis par la surface externe du crayon de combustible.
